# EUROPEAN PATENT APPLICATION

(11) **EP 1 580 996 A1**
(43) Date of publication of application: **28.09.2005**
(21) Application number: 03772732.8
(22) Date of filing: 13.11.2003
(51) Int. Cl.: H04N 5/91, G11B 20/10, G11B 27/034

(54) **PROGRAM WITH COPY FUNCTION AND INFORMATION RECORDING MEDIUM RECORDING THE PROGRAM THEREON**

(30) Priority: 20.11.2002 JP 2002336599; 06.11.2003 JP 2003376997
(71) Applicant: Konica Minolta Photo Imaging, Inc., Shinjuku-ku, Tokyo (JP)
(72) Inventor: UEDA, Yutaka, Hachioji-shi, Tokyo 192-8505 (JP); TAKEMURA, Koji, Hachioji-shi, Tokyo 192-8505 (JP); KOBOSHI, Shigeharu, Hachioji-shi, Tokyo 192-8505 (JP); IGARASHI, Takashi, Hino-shi, Tokyo 191-8511 (JP)
(74) Representative: Nicholls, Michael John
(86) International application number: PCT/JP2003/014451
(87) International publication number: WO 2004/047438

(57) **Abstract**

A program, including an image displaying program for using a computer to function as an image displaying device to display images based on image data by a predetermined displaying method, and a copying program for using the computer to function as a receiving device to receive a specified image data copying signal which specifies image data as an object to be copied, whereby the specified image is displayed from among the image data by the image displaying program on the display means via the predetermined expressing method, and for using the computer to function as a copying device to copy the specified image data and the image displaying program into a predetermined area, after the computer receives the specified image data copying signal.

## Description

This application is based on Japanese Patent Application Nos. 2002-336599 filed on November 20, 2002, and 2003-376997 filed on November 06, 2003 in the Japanese Patent Office, the entire content of which is hereby incorporated by reference.

### BACKGROUND OF THE INVENTION

The present invention relates to a program having a copying function and an information recording medium having the same program, and in particular, to a program functioning to copy image data and application software, as well as to an information recording medium in which the same program has been recorded.

In order to view photographic prints which a user captured by a camera, a user generally orders print service of an exposed film to an order receiving shop, such as a mini-laboratory or a photo-service shop of a large photo-finishing laboratory, after which the user arranges the prints in a photographic album, and views them. Recently, with the popularization of digital devices, the user downloads picture images captured by a digital camera into a computer terminal, such as a personal computer, to view the picture images, or the user orders the shop to transfer film images taken by an analog camera to digital image data, and thereby the user can view the picture image on a computer terminal.

Further, recently provided has been a handy terminal device, such as a cell-phone, incorporating a photo-capturing function. Such a method is a way that the picture image data, captured by the photo-capturing function, is displayed on the display means of the handy terminal device, or the image data is sent from the handy terminal device to the computer terminal so that the user can view the image data on the computer terminal.

According to the above-mentioned method, the captured images can be stored and controlled as digital data in a hard disk of the computer terminals, or information recording media, such as a CD-R, or a DVD-R, by which it is possible to save the trouble to fix pictures in a traditional album, and additionally, there is no need to store bulky three dimensional albums, which is a merit. In the case of photographic prints, the user can easily find targeted prints, simply be referring to the title of the album, however, when the user controls the photographic image only as digital data, the user must usually find the image data by a difficult alphanumeric file name, which is not convenient to retrieve the targeted images, which is a prosaic problem.

For example, as disclosed in Patent Document JP-A 5-108732, in a system of silver salt photography, for arranging the pictures in the album, the user produces the various albums in accordance with concepts of the pictures or in a time-series of events, and when the user wishes to view the pictures, the user selects the album, and finds related pictures or views the arranged layout of various pictures so that the targeted pictures can be easily located. However, in the case of the digital images, the user must retrieve the digital images by him/herself, using a key word which is textual data added onto the file name and the image data, alternatively the user must retrieve the images using application software.

In order to reduce the above inconvenient matters, the above Patent Document discloses as below.

Original picture data is recorded in a recording and reproducing device from an original picture input means through an original picture recording/reproduction control means, and this original picture data is edited by a picture editing means as simplifying it, and it is displayed on a picture display means by an inspected picture recording/reproduction control means, and simultaneously, the procedure of editing is recorded previously by an editing information recording/reproduction control means, and as for the picture designated by an output picture designating means, the high-definition output picture data generated by an output picture data generating means by using the original picture data in accordance with editing information is generated, and the picture is outputted (printed) by a picture output means like a printer, etc.

When the user edits the original picture images and retrieves them, using the method disclosed in the above Patent Document, the user can easily view the targeted pictures in the form of an album, similar to conventional silver salt pictures, via the simplified image data. Thereby, when the user prints a page of the digital album or a picture image, the user can obtain a clear image, using a highly accurate original image data.

[Patent Document 1] JP-A 5-108732 (pages 3-6, and Fig. 1)

The user can retrieve the targeted pictures from the recorded image data using the above method. However, in order to use the photographic image as image data, the user is requested to prepare by him/herself various kinds of application software for not only displaying the image data but also executing the process for treating the image data. In this case, the application software includes a program for displaying the image data in the form of an album, a program for displaying a slide show, a program for processing the image data, and a program for producing a post card or a designed print from the image data.

Further, in order to perform the process of the above application software, the user is requested to select, on each occasion, the targeted image data from the hard disk or the memory means, such as an information recording medium, in which the image data are stored, still further, the user is requested to set processing conditions for the various kinds of the application software, which can be quite cumbersome and time consuming. Specifically, owing to the popularization of digital devices, such as digital cameras, and cell-phones incorporating a camera function, and further, under the condition that the population taking digital photos increases, if the user is always requested to perform the above tasks whenever desiring the images, it is impossible to casually retrieve the digital image data.

Yet further, it is a common case in which the user captures images and enjoys them personally, or shares the images with friends as a gift. In order to effectively enjoy the digital images, it is necessary that only the necessary image data and the application software are recorded into the information recording medium, such as a CD-R (compact disk-readable). Though the information recording media, such as CD-R or DVD-R (digital versatile disk minus readable), are relatively inexpensive, a writing software must ordinarily be used, and thereby it is impossible to easily copy the necessary image data and the application software into the CD-R or DVD-R, though it is relatively easy for a FD (floppy disk) or an MO (magneto-optical disk). It is less feasible for a user, who is not skillful in the operation of a computer terminal, to employ a computer terminal with CD-R or DVD-R. Yet further, since the above information recording media are used to display the image data on the computer terminal, they cannot be used on an image reproducing devices, such as a DVD player or a DVD recorder, having higher operationality.

### SUMMARY OF THE INVENTION

The present invention has been achieved with a view toward the above-described problems. The major objects of this invention is to provide a program including a copy function which records image data as well as the necessary application software to display the image data, into another memory means, and further to provide an information recording medium into which the above described program is recorded. The object will be attained by the structures described below.

### Structure 1

A program, including an image displaying program for using a computer to function as an image displaying means to display images on a display means based on image data by a predetermined expressing method, and a copying program for using the computer to function as a receiving means to receive a specified image data copying signal which specifies image data as an object to be copied, whereby the specified image is displayed from among the image data by the image displaying program on the display means via the predetermined expressing method, and for using the computer to function as a copying means to copy the specified image data and the image displaying program into a predetermined area, after receiving the specified image data copying signal.

### Structure 2

In the program described in Structure 1, the image data to be copied includes image data which is the original base of the image to be displayed on the display means via the predetermined method, or image data which have been processed or produced based on the original image data.

### Structure 3

In the program described in Structure 2, the image data processed or produced based on the original image data, includes motion image data which is one in which predetermined difference data is added to the original image data, or image data used as a design print combined by the original image data.

### Structure 4

The program, described in Structures 1 - 3, uses the computer to function as a coping means which copies into the predetermined area, at least any one of, setting information to display the image on the display means via the predetermined method, music/sound information which is reproduced when the image is displayed, or ordering information for ordering prints based on the image data.

### Structure 5

An information recording medium, including an image displaying program for using a computer to function as an image displaying means to display images on a display means based on image data by a predetermined expressing method, and a copying program for using the computer to function as a receiving means to receive a specified image data copying signal which specifies image data as an object to be copied, whereby a specified image is displayed from the image data by the image displaying program on the display means via the predetermined expressing method, and for using the computer as a copying means to copy specified image data and the image displaying program into a predetermined area, after receiving the specified image data copying signal.

### Structure 6

An information recording medium, including, image data, an image displaying program for using a computer to function as an image displaying means to display images on a display means based on image data by a predetermined expressing method, and a copying program for using the computer to function as a receiving means to receive a specified image data copying signal which specifies image data as an object to be copied, whereby a specified image is displayed from the image data by the image displaying program on the display means via the predetermined expressing method, and for using the computer as a copying means to copy specified image data and the image displaying program into a predetermined area, after receiving the specified image data copying signal.

### Structure 7

An information recording medium, including image data, and a copying program for using the computer to function as a receiving means to receive a specified image data copying signal which specifies image data as an object to be copied, and for using the computer as a copying means to copy specified image data and the image displaying program into a predetermined area, after receiving the specified image data copying signal.

### Structure 8

The information recording medium, described in Structures 5-7, wherein the image data to be copied, includes, image data which is the original base of the image to be displayed on the display means via the predetermined method, or image data which have been processed or produced based on the original image data.

### Structure 9

The information recording medium, described in Structure 8, wherein the image data which have been processed or produced based on the image data, includes, motion image data which is one in which a predetermined difference data is added to the original image data, or image data used as a design print combined by the original image data.

### Structure 10

The information recording medium, described in Structures 5-9, uses the computer to function as a coping means which copies into the predetermined area, at least any one of, setting information to display the image on the display means via the predetermined method, music/sound information which is reproduced when the image is displayed, or ordering information for ordering prints based on the image data.

### Structure 11

An information recording medium, which is readable by a computer, including, image data, a first program for the computer to function as a receiving means of print order data signals for a print order based on image data, and for making the computer to function as a means for producing a print order data file based on the print order data signals, and a copying program (which is a second program) for the computer to function as a receiving means of specified image data copying signals to specify the image data as a target to be copied, and for the computer to function as a copying means to copy, the image data which is specified by the specified image data copying signals, the print order data file, and the first program, into a predetermined area, after the computer receives the specified image data copying signals.

According to the structures of the present invention, the user can easily obtain the information recording medium on which the copying program is stored, whereby both the targeted image data and the image displaying program for displaying the image data, as occasion demands, via the predetermined method, are paired and copied onto the predetermined area. Therefore, the user can display the image data using the computer terminal or the image reproducing device, such as a DVD player or a DVD recorder, and can also perform various processes using the image data. Further the user can copy the displayed image data and the image displaying program as desired into another memory means by a simple operation.

### BRIEF DESCRIPTION OF THE DRAWINGS

Fig. 1 shows a structural example of information recording medium offering systems related to the first embodiment of the present invention.
Fig. 2 is a flowchart showing the offering procedures of the information recording medium, using the information recording medium offering system related to the first embodiment of the present invention.
Fig. 3 is a block diagram showing a means in which a copying program, related to the first embodiment of the present invention, functions within the computer terminal.
Fig. 4 is a ladder chart showing the functional procedures in the computer terminal, with respect to the program of the first embodiment of the present invention.
Fig. 5 is a structural example of a screen displayed by an image displaying program related to the first embodiment of the present invention.
Fig. 6 (a) is a structural example of a screen displayed by an image displaying program related to the first embodiment of the present invention.
Fig. 6 (b) is a structural example of another screen displayed by an image displaying program related to the first embodiment of the present invention.
Fig. 6 (c) is a structural example of another screen displayed by an image displaying program related to the first embodiment of the present invention.
Fig. 7 is a ladder chart showing the operational procedures of a program, related to the second embodiment of the present invention, in the information recording medium producing terminal.
Fig. 8 is a structural example of a screen displayed by an image displaying program related to the second embodiment of the present invention.
Fig. 9 is a diagram of the exterior appearance of the information recording medium producing terminal of the present invention.
Fig. 10 is another diagram of the exterior appearance of the information recording medium producing terminal of the present invention.
Fig. 11 is still another diagram of the exterior appearance of the information recording medium producing terminal of the present invention.
Fig. 12 is yet another diagram of the exterior appearance of the information recording medium producing terminal of the present invention.

### DETAILED DESCRIPTION OF THE PREFERRED EMBODIMENTS

In a preferred embodiment, the program related to the present invention, includes an image displaying program which uses a computer to function as an image displaying means to display images on a display means based on image data by a predetermined expressing method, and a copying program which uses the computer to function as a receiving means to receive a specified image data copying signal which specifies image data as an object to be copied, whereby a specified image is displayed from the image data by the image displaying program on the display means via the predetermined expressing method, and as a copying means to copy a specified image data and the image displaying program into a second information recording medium, after receiving the specified image data copying signal. By using a first information recording medium in which the image displaying program is recorded, the user can display the image data recorded in the first information recording medium or the image data from other recording means, on a computer terminal or an image reproducing devices, such as DVD players or DVD players, and can execute various processes. Further, by easily clicking the buttons previously provided on the screens of the various image displaying programs, the user can automatically copy the targeted image data, the image displaying program, or setting information. Accordingly even the user who is unaccustomed to the computer terminal, can use the image data effectively.

In order to provide further details of the embodiments of the present invention, the embodiments will be detailed referring to the drawings. Additionally, the image data, described in the embodiments, is a generic name of the data including image information, and the image data includes still image data as well as motion image data.

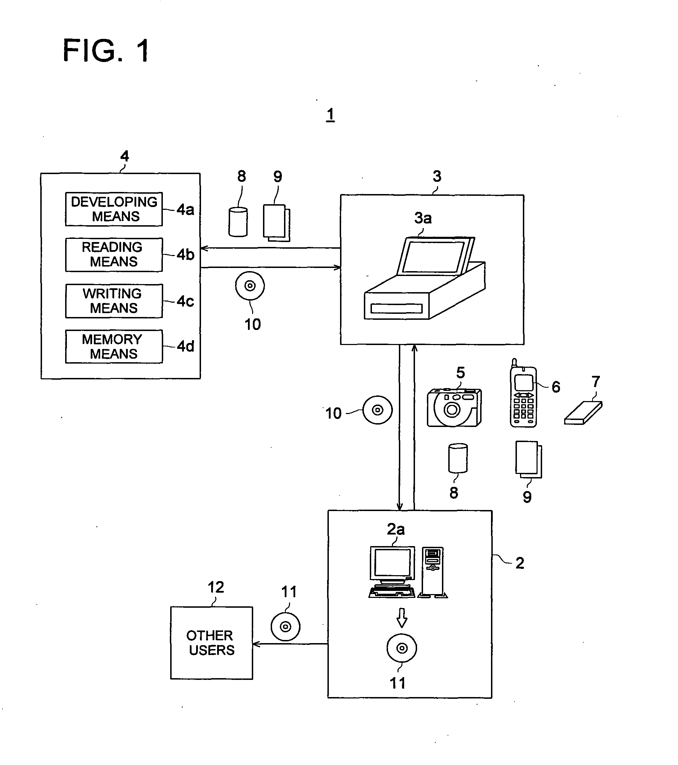

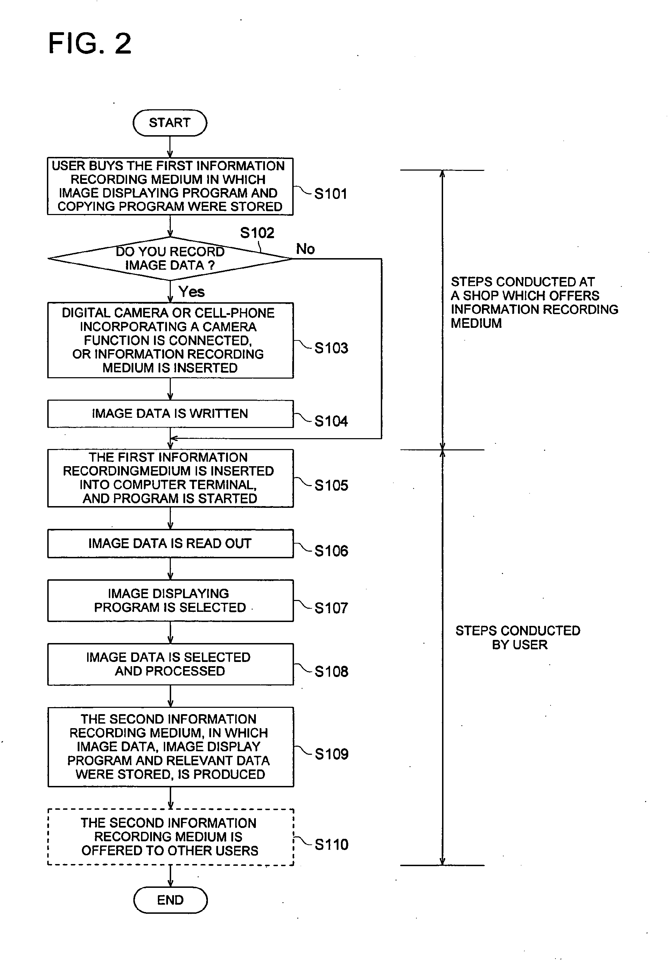

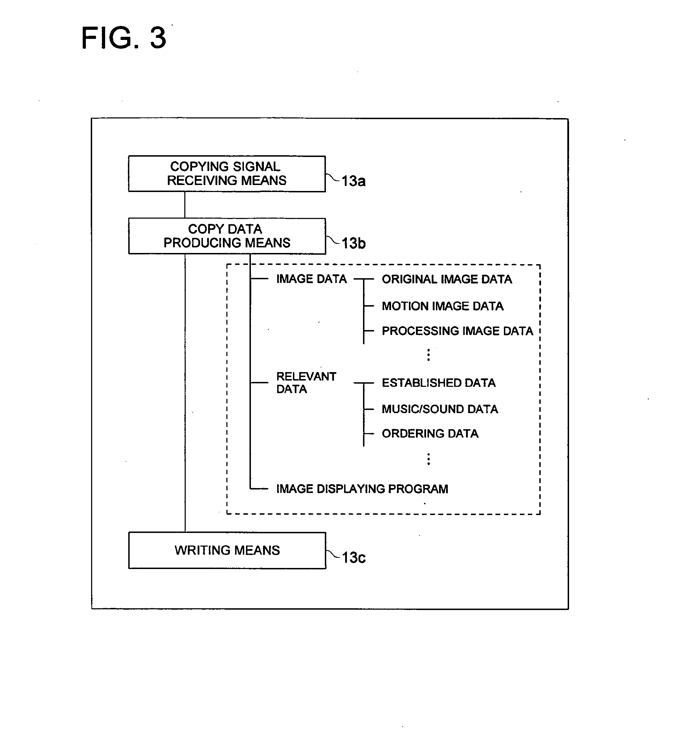

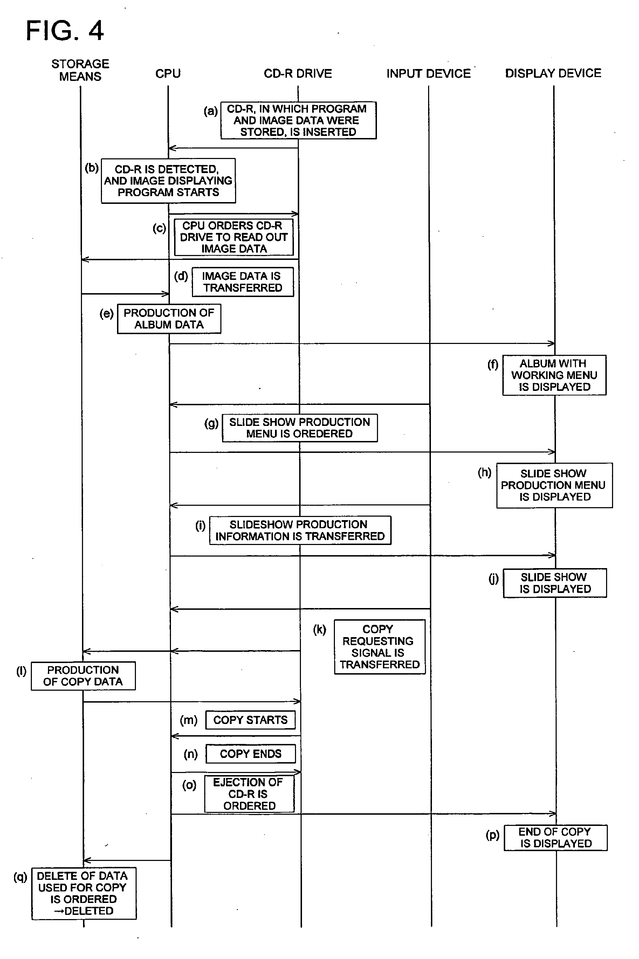

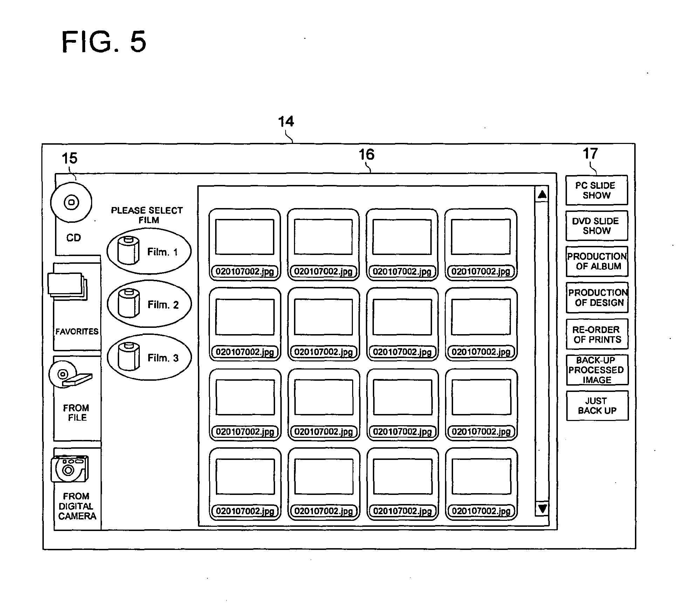

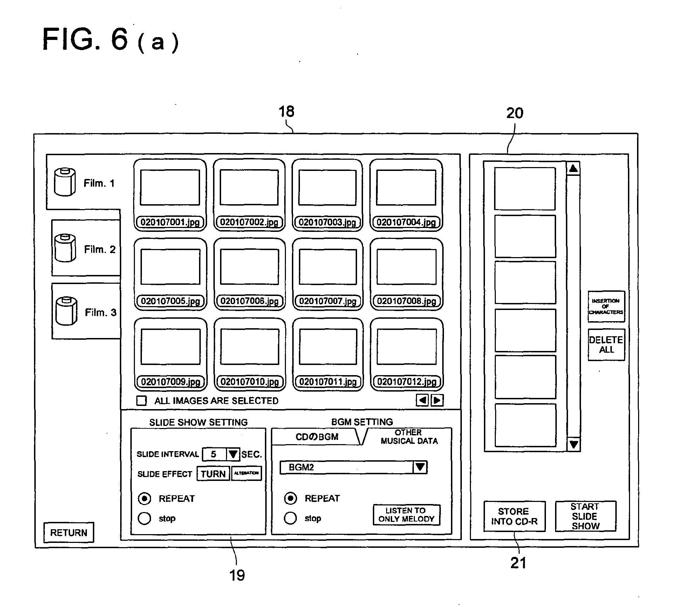

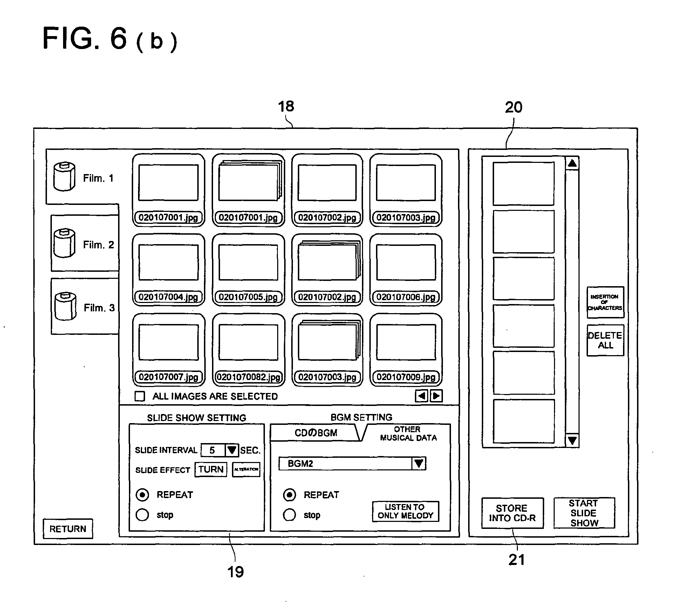

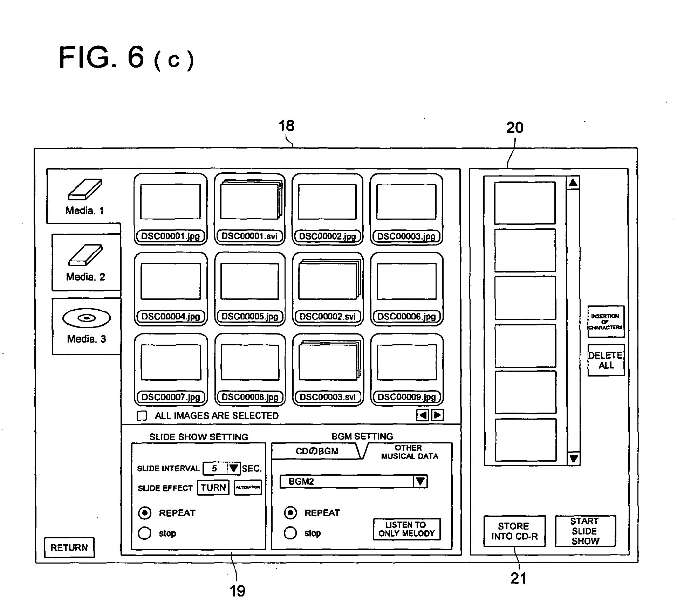

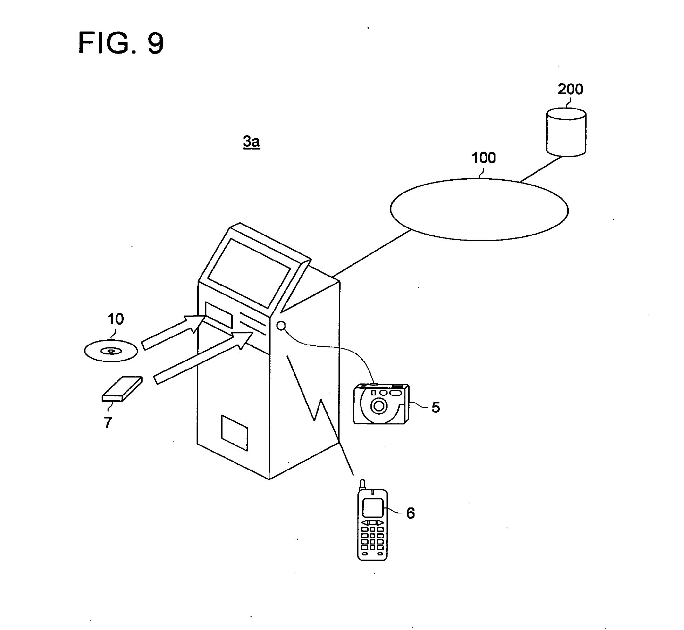

Firstly, the program and the information recording medium in which the said program is recorded, related to the first embodiment of the present invention, will be explained, referring to Figs. 1 - 6, and Figs. 9 - 12. Fig. 1 shows the structure of the system for offering the information recording medium for the user, in which programs include copying functions related to the first embodiment. Fig. 2 is a flowchart showing the procedure of offering the information recording medium to the user. Fig. 3 is a block diagram showing the means in which the copying program makes the computer function. Fig. 4 is a ladder chart showing the procedure of processes executed via the computer terminal. Fig. 5 and Figs. 6 (a), (b), and (c) show examples of structures of the screen displayed on the user's computer terminal. Figs. 9 - 12 show the exterior appearance of various information recording medium producing terminals.

As shown in Fig. 1, information recording medium offering system 1 of the present embodiment includes user 2, information recording medium offering shop 3 (shop 3 which offers information recording medium), and photo-service shop 4. In system 1, user 2 offers digital camera 5, cell-phone 6 incorporating a camera, and information recording medium 7, all of which have recorded photographic image data, and may also offer both of film 8 and photographic prints 9, on both of which photographic images are recorded. Information recording medium offering shop 3 reads out image data from digital camera 5 (including digital still cameras and digital video cameras), cell-phone 6 incorporating a camera, and information recording medium 7, and further, offers first information recording medium 10 in which the image displaying program for displaying the image data, as well as the copying program for recording the image data and the image displaying program has been recorded. Photo-service shop 4, such as a mini-laboratory or a large photo-finishing laboratory, obtains the image data from film 8 or photographic prints 9 submitted by user 2. Additionally, it is possible that information recording medium offering shop 3 and photo-service shop 4 may be within housed in the same shop.

Further, information recording medium offering shop 3 is provided with information recording medium producing terminal 3a for reading out the image data from digital camera 5, cell-phone 6 incorporating a camera, and information recording medium 7. Still further, photo-service shop 4 is provided with developing means 4a for developing undeveloped film, reading means 4b for reading out the image data from developed negative film or photographic prints 9, writing means 4c for writing the read-out image data onto first information recording medium 10, and memory means 4d for storing the image displaying program and the copying program. Still further, user 2 is provided with computer terminal 2a for recording the targeted image data and the image displaying program onto second information recording medium 11, using the copying program stored on first information recording medium 10. User 2 may offer second information recording medium 11 to other users 12 as desired.

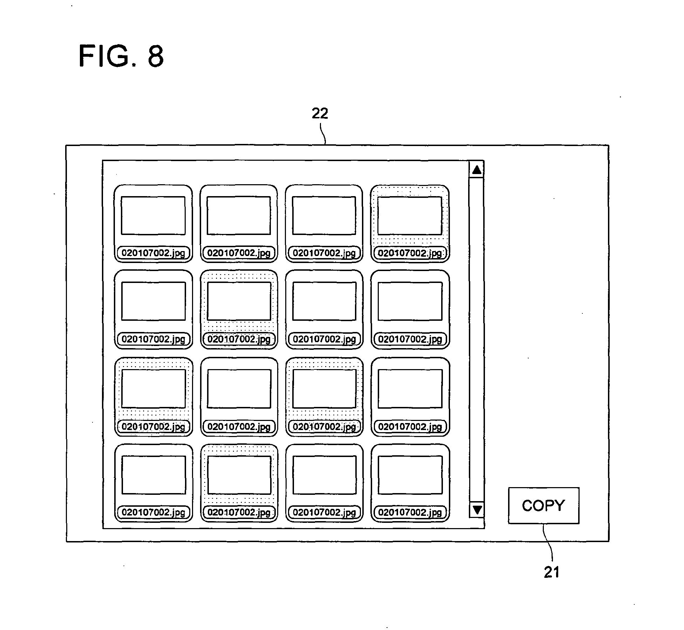

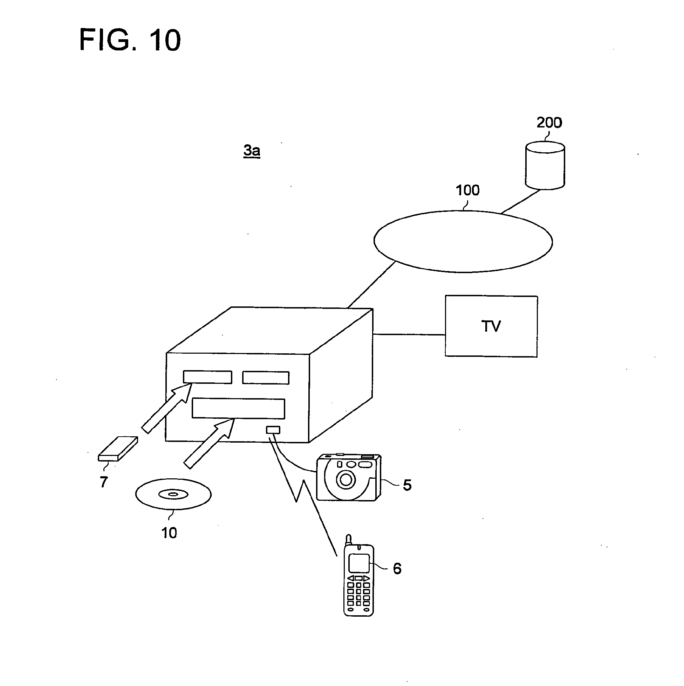

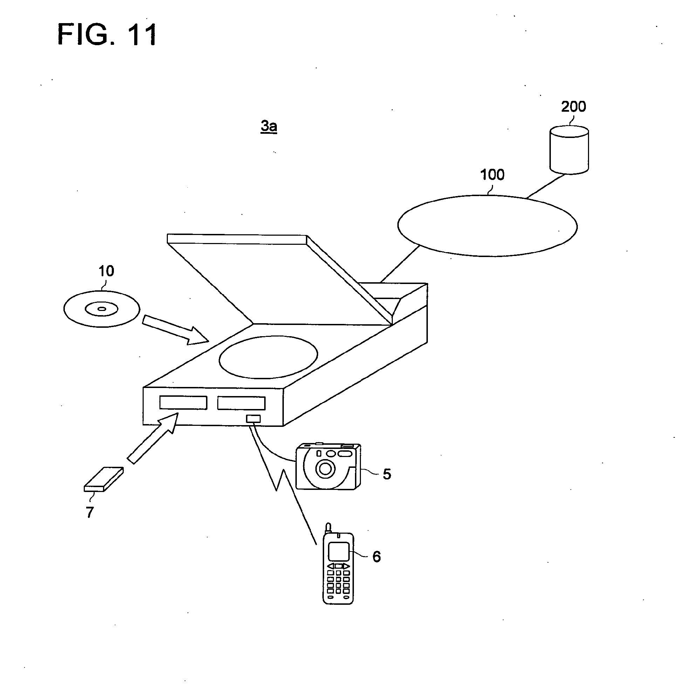

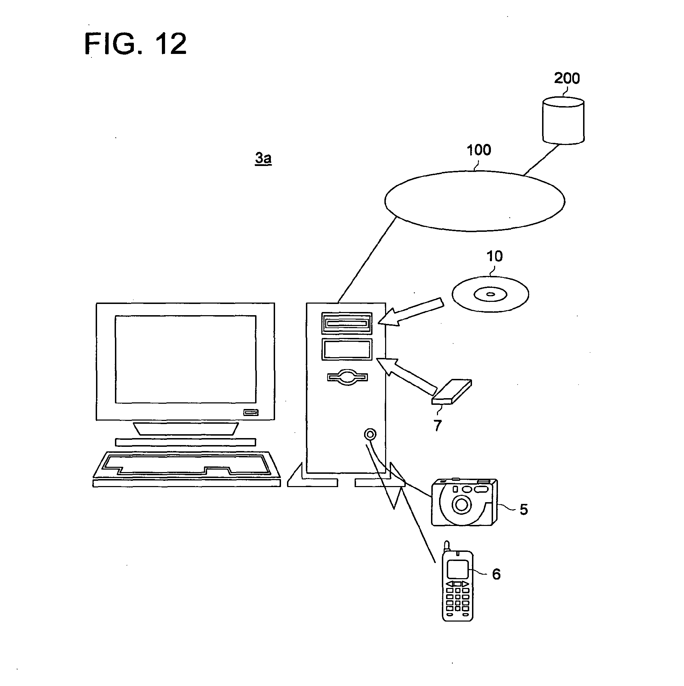

Information recording medium producing terminal 3a and computer terminal 2a can be structured as desired. For example, as shown in Fig. 9, information recording medium producing terminal 3a can be formed to be a kiosk type which is installed in a shop, such as a convenience store. As shown in Fig. 10, a set-top box can be formed which is an exclusive function. A portable writer in Fig. 11, or a personal computer in Fig. 12 may also be used. For these purposes, a DVD player or a DVD recorder, incorporating an operational processing means or a memory means, may be used as well. In the following description, an "image displaying program" means a program for reading image data and displaying said image on a display device, such as a personal computer, or a device having an image display function, such as a DVD player and a DVD recorder. The simplest way is one which reads the image data and directly displays the image. A more viewable means is one which displays a plurality of the images in the matrix form shown in Fig. 8, wherein when user 2 clicks once on a desired image, the image is selected for the copy, when the user 2 clicks twice on the same image, the selection is cancelled, and when the user 2 pushes a copy button, the image data for the selected images and an index display program are copied onto a blank CD-R (hereinafter referred to as a blank CD). As a further developed form, the "image displaying program" means a program for displaying the image via a predetermined display method based on the image data, such as a slide show program for showing a series of slides, an album producing program for displaying the image data in a form of an electronic album, a design producing program for producing and ordering post cards or specially designed prints based on the image data, a reordering and producing program for reordering the prints of selected image data, and a back-up program for preserving the image data. Information recording medium 7 includes Compact Flash (a registered trademark), any type of memory card, such as a Smart Media, a Memory Stick (a registered trademark), a Multimedia card, or an SD memory card, CD-R/RW, DVD±R/RW, DVD-RAM, Blu-ray disk, MO, and ZIP. First information recording medium 10 and second information recording medium 11 include CD-R/RW, DVD±R/RW, DVD-RAM, and Blu-ray disk.

In information recording medium offering system 1 described above, the procedure, for offering user 2 first information recording medium 10 in which the image displaying program and the copying program have been stored, is detailed in the flowchart of Fig. 2. Additionally, the present invention offers first information recording medium 10 which can be used for any one of or both of the computer terminals, such as a personal computer, and the image reproducing device, such as a DVD player or a DVD recorder. When it is used for a computer terminal, the image displaying program is necessary, but when it is used for an image reproducing device, it is possible to reproduce the image data without the image displaying program, that is, the image displaying program is not always necessary. The case wherein first information recording medium 10 used for the computer terminal is offered will be described below.

Firstly, in step S101 in Fig. 2, user 2 purchases first information recording medium 10, in which the image displaying program and the copying program have already been stored, at information recording medium offering shop 3. The function of the copying program will be detailed later. As shown in Fig. 3, the copying program makes the computer function as copy signal receiving means 13a, copy data producing means 13b, and writing mean 13c. Copy signal receiving means 13a receives the specified image data copy signals which specify the image data displayed by the image displaying program, as the targeted image data to be copied. Copy data producing means 13b produces the copy data which includes the image data specified by the specified image data copy signals (the image data means the original image data or the image data produced based on the original image data), the image displaying program which is used for displaying said image data, and the data (for example, setting data for setting the display method of the image displaying program) relating to the image data as desired. Writing means 13c copies the copy data to a predetermined memory means, such as a CD-R.

Though only the image displaying program and the copying program can be stored into first information recording medium 10, the image data can also be stored, which is used by the image displaying program. In step S102, user 2 determines whether the image data is to be stored in first information recording medium 10, when the image data is to be stored, in step S 103, the user inserts first information recording medium 10, which user 2 bought, into information recording medium producing terminal 3a in information recording medium offering shop 3, and further, user 2 connects digital camera by which the image was captured, and cell-phone 5 incorporating the camera to information recording medium producing terminal 3a. Yet further, user 2 inserts information recording medium 7 in which the image data was stored. In step S104, user 2 operates information recording medium producing terminal 3a which writes the targeted image data onto first information recording medium 10 (see Fig. 1).

In the above explanation, user 2 firstly bought first information recording medium 10, and then operated information recording medium producing terminal 3a to write the image data onto first information recording medium 10. However, in Fig. 1, a structure is also possible in such way that, firstly, the image displaying program and the copying program are previously stored in information recording medium producing terminal 3a, next, when the image data, read out from digital camera 5, cell-phone 6 incorporating the camera, or information recording medium 7, all of which are offered by user 2, are written, the image displaying program and the copying program are also written into first information recording medium 10. Additionally, if the image displaying program has been previously installed into computer terminal 2a, a structure is also possible in such way that only the copying program or only both the copying program and the image data are stored in first information recording medium 10.

Further, in Fig. 1, a structure is also possible in such way that when user 2 brings undeveloped film 8 or photographic print 9 into information recording medium offering shop 3, film 8, print 9, and the first information recording medium which user 2 bought are sent to photo-service shop 4, where film 8 is developed by developing means 4a, and the developed film or photographic print 9 is read out by reading means 4b, and the read-out image data is stored in first information recording medium 10 by writing means 4c. Still further, another structure is also possible in such way that film 8 or photographic print 9 is sent to photo-service shop 4, where film 6 is developed, and the developed film or photographic print 9 is read out, after which the read-out image data, the image displaying program and the copying program stored in memory means 4d are stored in first information recording medium 10. Still further, it is also possible to structure in such way that only the read-out image data is stored into another information recording medium, which is offered to user 2. Additionally, if the image displaying program and the copying program are not stored into first information recording medium 10 at photo-service shop 4, memory means 4d is not necessary.

User 2 receives first information recording medium 10 in which the image displaying program and the copying program were stored, or receives first information recording medium 10 in which the image displaying program, the copying program, and the image data offered by user 2 were stored. In step S105, user 2 inserts first information recording medium 10 into computer terminal 2a, if the image displaying program is not installed in computer terminal 2a, user 2 installs the image displaying program and activates the image displaying program. Additionally, as another way, a structure is also possible in such way that user 2 directly activates the image displaying program, without installing the programs stored in first information recording medium 10, into the computer terminal 2a. Next, in step S106, user 2 reads out the image data stored in first information recording medium 10, or the image data stored the exterior memory means, and displays them on a convenient display means such as a monitor. In this case, the image data means the image data stored in the hard disk of computer terminal 2a, or the image data stored in digital camera 5 or cell-phone 6 incorporating a camera, or the image data stored in another information recording medium, based on film 8 or photographic print 9, at photo-service shop 4.

In step S107, the targeted image displaying program is selected. In step S108, user 2 performs various processes in which the targeted image data is selected from among the displayed image data via the image displaying program selected in step S107, a slide show is produced of the selected image data, or the motion image data is produced by the image data (which is still image data), and further, a digital album, a design print, or re-ordering data are produced.

In step S109, user 2 pushes a button or a key which is previously provided on a picture screen, displayed by the image displaying program, and activates the copying program so that user 2 stores the image data and the image displaying program to display the targeted image data onto a predetermined area (for example, second information recording medium 11). Additionally, the image data to be stored into the second information recording medium is not limited to original image data. That is, the data which is processed and produced based on the original image data can also be included (for example, motion image data or album image data, produced based on still image data, and image data of composite design prints). Further, both the original image data and the processed and produced image data can also be included. Yet further, various relevant data can also be included, such as setting data for displaying the image data by the image displaying program, music/sound data which is reproduced when the image data is displayed, or print ordering data.

Next, user 2 inserts second information recording medium 11 produced by the above-described procedure into computer terminal 2a, and displays the targeted image data using the targeted processing program, or offers second information recording medium 11 to other user 12 who is a friend or an acquaintance, shown in step S110.

In this way, at information recording medium offering shop 3 or photo-service shop 4, user 2 obtains first information recording medium 10 in which an image displaying program, a copying program, and image data as desired were stored. Therefore, without special installation of the image displaying program, user 2 can easily display the image data, and easily store a set of the targeted image data, the image displaying program, and the relevant data as desired, by using the copying program. Namely, user 2 can easily produce second information recording medium 11 which is customized for the special use, such as a gift to other user 12. Furthermore, by additionally storing the copying program into second information recording medium 11, other user 12 can produce another customized information recording medium (which is not illustrated).

Next, in the case that computer terminal 2a is employed, the procedure of the process, in which first information recording medium 10 is used, will be detailed, referring to the ladder chart in Fig. 4, and examples of the screen structures shown in Figs. 5 and 6. In the example detailed in the explanation below, the image data has been previously stored in first information recording medium 10. However, it is also possible to use the image data stored in the memory means except for first information recording medium 10, such as a hard disk, an MO drive, or a PC card drive, all of which are included in computer terminal 2a, and can be accessed from CPU 11. Further, it is also possible to use the image data which has been stored in an external memory means, such as a server or a computer, via the network. Additionally, as the image displaying program, a slide show program via a personal computer is used in the explanation below, but the copying procedure via a copying program is also available in other image displaying programs.

The slide show program via a personal computer, shown by one of the seven symbols 17 of Fig. 5, is explained below. Firstly, user 2 inserts first information recording medium 10 into a read/write section of computer terminal 2a [(a) in Fig. 4]. (In this case, the first information recording medium is a CD-R, and therefore, a CD-R drive is used. If another information recording medium, such as a DVD-R, a PD, or a ZIP, is used, a specific drive for each medium is required.) CPU of computer terminal 2a notes the entrance of a CD-R. If the image displaying program stored in the CD-R has already been installed in computer terminal 2a, the CPU activates the installed program, but if the image displaying program stored in the CD-R has not yet been installed in computer terminal 2a, user 2 installs the image displaying program, after which the CPU activates the installed program [(b) in Fig. 4]. If a single kind of image displaying program is used, said program is to be activated, but if a plurality of the image displaying programs are used, a structure is possible in such way that a menu program is firstly activated, after which the image displaying program can be selected on a menu screen.

CPU orders the CD-R drive to read the image data [(c) in Fig. 4]. CD-R drive then transfers the image data stored in CD-R to a storage means, such as a memory [(d) in Fig. 4]. CPU produces an album data from the image data transferred from the storage [(e) in Fig. 4]. The display device such as a monitor displays an album display screen having a working menu [(f) in Fig. 4]. The album display screen having the working menu is shown in Fig. 5.

Displayed on album display screen 14 featuring the working menu, for example, are tag display section 15 showing a "source" of the image data, album display section 16 listing the image data using reduced images (thumbnail images), and working menu section 17 for selecting a usable image displaying program. "Source" means that the "CD" showing first information recording medium 10, the "favorites file" showing a storing section of the image data which user 2 stores as favorite images, and the "from file" showing the hard disk of computer terminal 2a, the information recording medium produced from a negative film or print by photo-service shop 4, or a medium used in the digital camera 5, and "from digital camera" showing digital camera 5 or cell-phone 5 incorporating a camera.

In Fig. 5, seven kinds of the working menus are shown, that is, "PC slide show" displays the slides, while sequentially changing the image data on the personal computer, "DVD slide show" writes the motion image data, produced based on the image data, onto the recording medium in such a way that the motion image data can be displayed via a DVD player, "album production" produces a digital album using the image data, "design production" produces a designed print of a post card using the image data, "re-order print" orders re-prints of the image data, "backup processing image data" backs up the image data via a predetermined process, and "just back-up" merely produces backup data. However the working menus are not limited to those above, and it is also possible to display various programs, which display the image by predetermined display methods based on the image data.

For example, by using the input device, such as a mouse, a keyboard, or a touch panel, when user 2 selects the targeted program among the image displaying programs displayed on working menu section 17 in Fig. 5 (in this case, "PC slide show" is selected), the instruction, requiring display of the slide show production menu, is sent from the input device to CPU [(g) in Fig. 4]. The CPU then displays slide show production menu display screen 18 [(h) in Fig. 4].

On slide show production menu display screen 18, slide show setting section 19 and selected image data display section 20 are displayed. Slide show setting section 19 includes an area for displaying the image data as the list, as well as an area for setting the image interval during the slide show, transition effects, and BGM (back ground music) during the slide show. Selected image data display section 20 displays the image data to be reproduced for the slide show. Fig. 6(a) shows that the still image data is recorded as the image data, but the motion image data as well as still image data can also be recorded, and for this case, the still image data and the motion image data are mixed and displayed on a list display section, as shown in Fig. 6(b). User 2 can distinguish between the still image data and the motion image data by noting extensions, but in order that user 2 can more early distinguish them at a glance, display forms of both types of image data can be changed. Fig. 6(b) is an example showing the image data obtained by reading out image information recorded on the film. For displaying the image data recorded in information recording medium 7, shown in Fig. 6(c), the still image data and the motion image data recorded in information recording media 7 are sorted with respect to each information recording medium 7, and then displayed. Further, for displaying the image data recorded in digital camera 5, shown in Fig. 6(c), the still image data and the motion image data recorded in digital camera 5 are sorted with respect to specific digital cameras 5, and displayed.

Using the input device, user 2 selects the image data to display the slides, sets the slide show, sets the BGM, and pushes the start switch of the slide show provided on selected image data display section 20, by which slide show production information is sent to the CPU [(i) in Fig. 4], after which the CPU performs the display of the slide show on the display device [(j) in Fig.4]. When only still image data is selected, the slide show is produced based on the conditions established on slide show setting section 19. When both still image data and motion image data are selected, the motion image data, reproduced by the image interval, any transition effects, and BGM, established on slide show setting section 19, is formed in regard to the still image data, while the motion image data to be reproduced as a set of the slide show is produced via combining the motion image data and the selected motion image data. Additionally, the image based on the motion image data can be displayed separately from the image based on the still image data, and when the image based on the motion image data is relatively small, the motion image data can be reproduced on the image based on the still image data, via another window, and further, when music/sound information is included in the motion image data, the sound volume of BGM can be reduced or muted during reproduction of the motion image data.

During the above-described operation, user 2 can monitor the slide show, but if user 2 quits the image displaying program (the slide show program in this case), and wants to display the slide show under the same conditions, user 2 must re-select the image data, re-set the slide show and re-set the BGM, which is very inconvenient. Further, when the slide show is not only enjoyed by user 2, but also presented to the acquaintance, it is preferable that only the necessary image data is shown and the slide show is conducted without any complicated operations. Accordingly, in the present embodiment, it is possible to record both the image data and the image displaying program (slide show program in this case), selected by user 2, into another information recording medium, via a simple operation.

To be more precise, after user 2 checks the slide show, user 2 pushes copy button 21 [which is the "store into CD-R" button in Fig. 6(a)] which is previously provided in selected image data display section 20 of slide show production menu display screen 18. Then a signal to copy (which is a selected image data copying signal) is transferred from the input device to CPU [(k) in Fig. 4], and thereby the copying program is operated. Since the copying program causes the computer to function as copy signal receiving means 13a, copy data producing means 13b, and writing means 13c (see Fig. 3), when copy signal receiving means 13a receives the signal for giving an order to copy, copy data producing means 13b produces the copy data [(1) in Fig. 4].

The copy data includes the image data selected by user 2 as well as the image displaying program for displaying the image data, and further, the copy data can include thumbnail image data, which is used when plural image data are shown in the list on the screen. Yet further, the copy data can include related data, such as the setting data, which means the slide display order, image intervals, and transition effects, and music/sound data, which is reproduced simultaneously with the image data.

When the production of copy data is completed, writing means 13c starts the copy operation into a predetermined area (a blank CD inserted CD-R drive, in this case), [(m) in Fig. 4]. When the copy operation is completed, CD-R drive sends a copy end signal to CPU [(n) in Fig. 4], after which CPU orders CD-R drive to eject the copied CD-R [(o) in Fig. 4], as well as displays the end of copy on the display device [(p) in Fig. 4]. Further, CPU orders the storage means to clear the data used for copying, and after the order is received, the storage means clears the copy data, by which the total operation is completed [(q) in Fig. 4].

The above explanation concerns the case in which the slide show is selected as the working menu, however, second information recording medium 11 can also be produced in the case in which another operation is selected, the outline of which is described below.

The DVD slide show, shown by one of the seven symbols 17 of Fig. 5, will now be explained. In the case of the PC slide show, the image data is sequentially displayed in the form of slides by the predetermined transition effects, which was described above. In recent years, there was a great increase in the number of user 2 or other user 12, both having available DVD players which can reproduce the image data via the DVD-R or CD-R. The DVD player does not require a long start-up time, which is different from a personal computer, and is easily operated, and a large number of people can view the image data on a DVD player. Accordingly, it is convenient for the user to reproduce a slide show using a DVD player.

In the present embodiment, a button for the "DVD slide show" is provided in working menu section 17 in Fig. 5. When user 2 pushes said button, the DVD slide show production menu screen (which is not illustrated) is displayed. User 2 selects the targeted image data as well as the music/sound data, and orders the production of the DVD slide show. If the selected image data is still images, the difference data based on special predetermined transition effects is added to the image data, and thereby a motion image data is produced. Further, if the selected image data includes both still image data and motion image data, firstly the motion image data is produced from the still image data by the above-described method, then the produced motion image data and the selected motion image data are combined, and finally the combined motion image data is reproduced as an integrated set of a slide show. Said motion image data can be formed as various structures which are useful in the DVD player, such as MPEGs 1, 2, or 4. Concerning the production method of the motion image data based on the still image data, various methods can be used, for example, the method disclosed in Japanese Patent Publication No. 2003-259303 by the inventor of the present invention can be used.

After the motion image data is produced, user 2 pushes copy button 21 [which is the "store into CD-R" button in Fig. 6(a)] in the DVD slide show production menu screen, by which signals for giving an order to copy (which is a selected image data copy signal) is transferred from the input device to the CPU, and copy signal receiving means 13a receives the signal for giving the order to copy, after which copy data production means 13b produces the copy data including the motion image data, the slide show program, the original image data, music/sound data, and the setting data for producing the motion image, and finally, writing means 13c writes the copy data onto a blank CD, which becomes second information recording medium 11.

The production of an album, shown by symbol 17 of Fig. 5, will now be explained. When the amount of image data becomes excessive, it becomes difficult to select the targeted image data. In that case, a digital album is very convenient, in which a great number of images data can be selected and arranged, and which is very easy to search for a specific image by the user.

Accordingly, in the present embodiment, an "album production" button is provided in working menu section 17 in Fig. 5. When said album production button is pressed, an album production menu screen (which is not illustrated) is displayed. On that album production menu screen, user 2 can classify the image data and can input titles, can input detailed information for each image data, or can set the display for turning over the pages of each album. After the production of the album, when user 2 clicks the copy button on the screen, the specified image data copy signal is transferred from the input device to the CPU, and copying signal receiving means 13a receives the signal (see Fig. 3). Copy data production means 13b produces the copy data including the selected image data, the album displaying program, and the music/sound data reproduced with the setting data for an album and the album display, as desired. Further, writing means 13c stores the copy data onto a blank CD so that second information recording medium 11 is produced.

Next, the design production, shown by symbol 17 of Fig. 5, will be explained. In recent years, there has been a huge increase of the number of users who display their image data onto their computer screen, as well as produce custom designed prints, such as post cards, based on the image data, and therefore, it is very convenient if the design prints are produced via first information recording medium 10 of the present embodiment. Further if it is possible that the processed image data, and the order data, including the size of the custom designed prints, the design type of post cards or the name cards, and the number of the producing prints, are set and stored in the information recording medium, the user can easily place an order of the design prints, by introducing said information recording medium to information recording medium offering shop 3, or sending the data to photo-service shop 4 via a network.

Accordingly, in the present embodiment, a "design production" button is provided in working menu section 17 in Fig. 5. When said design production button is pressed, a design production menu screen (which is not illustrated) is displayed. On that design production menu screen, user 2 can manipulate the image data as enlargement, reduction or rotation of the image, on a previously set template, further user 2 can input text to be printed on designed prints, and yet further, can submit ordering data, such as the size of the designed prints, and the production amount of the designed prints. When print ordering data signals based on the image data are received, a specific print ordering data file is produced based on the print ordering data signals. When user 2 clicks the copy button on the screen, the specified image data copy signal is transferred from the input device to a CPU, whereby copying signal receiving means 13a receives the signal (see Fig. 3). Copy data production means 13b produces the copy data, including the combined image data, the print ordering data, as well as the program for displaying the original image data used for the design prints, the image data, and the print ordering data, as desired. Further, writing means 13c stores the copy data onto a blank CD so that second information recording medium 11 is produced.

The print re-ordering, shown by symbol 17 of Fig. 5, will be explained below.

In order to re-order the prints, user 2 generally introduces the image data to be re-ordered to the print service shop, and the shop describes an ordering sheet. If it is possible to make a set of the image data to be re-ordered and the ordering sheet, and to store the set onto the information recording medium, the user can place a re-order, using said information recording medium, which becomes very convenient.

Accordingly, in the present embodiment, "print re-ordering" button is provided in working menu section 17 of Fig. 5. When the print re-ordering button is pressed, a print re-ordering menu screen (which is not illustrated) is displayed. On the print re-ordering menu screen, user 2 can select the image data to be re-ordered, and can produce a re-ordering data including ordering information, such as the size and number of the prints. After the print ordering data is produced, user 2 clicks the copy button of the screen, the specified image data copy signal is transferred from the input device to a CPU, and the copying program works so that copying signal receiving means 13a receives the signals (see Fig. 3). Copy data production means 13b produces the copy data, including the selected image data, the print ordering data, and the program for displaying the image data, as well as the print ordering data, as desired. Further, the copying program works so that writing means 13c stores the copy data onto a blank CD, and thereby, second information recording medium 11 is created.

Additionally, concerning the image data and relevant information stored in first information recording medium 10 as well as second information recording medium 12, it is preferable to display them in a single file when they are viewed from the outside, and further, they are preferably in a compressed form. Yet further, it is preferable that they are formed in such way that they can be accessed only via an exclusive software. Thereby, data retrieving is simplified, or partial missing of the data is prevented, and which is very beneficial for the user 2 or user 12. Still further, it is possible to obtain a large number of users who exclusively use the present embodiment.

Next, the back-up of the processed image, shown by another one of the seven symbols 17 of Fig. 5, will be explained. The image data, which is obtained by digital cameras 5 or cell-phone 6 incorporating a photo-capturing function, is not always suitable for displaying on computer terminal 2a or for outputting the prints. That is, a color management process may be conducted on the image to adjust the desired color, including brightness and gradation. In this case, it is very cumbersome if the image data is selected and processed image by image, but it is very convenient if the selected image data can be processed as a group, and then backed up.

Accordingly, in the present embodiment, a "processed image back-up" button is provided on working menu section 17 of Fig. 5. When the print re-ordering button is pressed, a processed image back-up production menu screen (which is not illustrated) is displayed. On the processed image back-up production menu screen, after user 2 selects the image data to be processed, user 2 clicks the copy button on the screen, then the specified image data copy signals are transferred from the input device to a CPU. After copying signal receiving means 13a receives the signals (see Fig. 3), copy data production means 13b produces the copy data, including the selected and processed image data, the original image data, the setting data showing the contents of the process, and the program for displaying the image data, as desired. Writing means 13c stores the copy data onto a blank CD, and thereby, second information recording medium 11 is produced.

The just back-up, shown by one of the seven symbols 17 of Fig. 5, will be explained below. When photographic images are stored and controlled as image data, if there is a problem in the memory means for storing the image data, such as a hard disk, the image data stored in the memory means cannot be read out, for which reason, back-up data is ordinarily produced. In this case, though the back-up data may be produced via the function of an OS (which is operating software), the production of back-up data is very problematic for users who are unaccustomed to the operation of a personal computer.

Accordingly, in the present embodiment, a "just back-up" button is provided in working menu section 17 of Fig. 5. When the just back-up button is pressed, a just back-up production menu screen (which is not illustrated) is displayed. On the just back-up production menu screen, user 2 clicks the copy button on the screen, then the specified image data copy signal is transferred from the input device to the CPU. After copying signal receiving means 13a receives the signals (see Fig. 3), copy data production means 13b produces the copy data, including the image data stored in the predetermined memory means (for example, first information recording medium 10), and the program for displaying the image data, as desired. Writing means 13c stores the copy data onto a blank CD, and thereby, second information recording medium 11 is produced.

As described above, user 2 is able to display the image data, via first information recording medium10, which is offered by the present system. If only user 2 clicks copy button 21 which is previously provided on the screen of each image display program, user 2 can record onto second information recording medium 11, the image data (original image data, motion image data, and the processed image data) which user 2 selected, the image display program for displaying the image data, and other relevant data (the setting data, the ordering data, and the music/sound data), as desired. Accordingly, when user 2 displays the image data, user 2 need not select the image data or perform setting of the display, which were necessary for the conventional art. If only user 2 activates newly produced second information recording medium 11, user 2 is able to display the targeted image data via the targeted method.

Described above is the structure, wherein the image display program as well as the copying program is stored in first information recording medium 10, which is to be offered to user 2. However, the present invention is not limited to the above structure. That is, also used may be a structure wherein computer terminal 2a of user 2, and photo-service server 200 for offering the program are connected to each other via communication network 100, and thereby, the program is also available to user 2 via a network as electrical data.

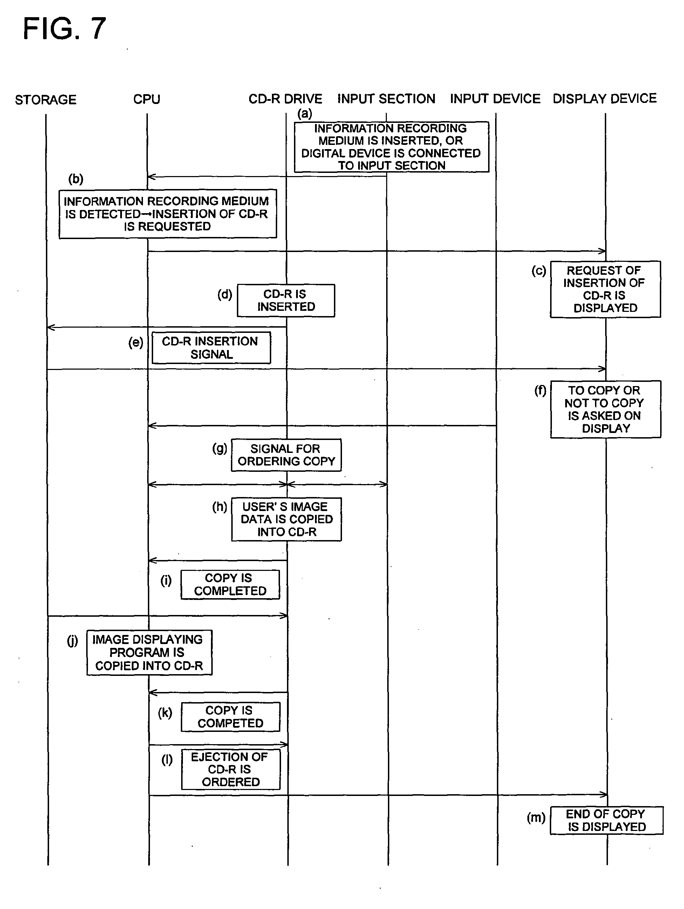

Next, the program and the information recording medium production terminal, related to the second embodiment of the present invention, will be detailed, while referring to Fig. 7. Fig. 7 is a ladder chart showing the procedures which are performed on the information recording medium production terminal.

Though these procedures were explained in the above-described first embodiment, wherein first information recording medium 10, in which the image displaying program and the copying program were stored, was offered to user 2, and second information recording medium 11 was produced from first information recording medium 10 via computer terminal 2a of user 2, it is also possible to activate the copying program of the present invention via information recording medium production terminal 3a of information recording medium offering shop 3.

Referring to the ladder chart in Fig. 7, the process performed in information recording medium production terminal 3a will now be described. Firstly, user 2 inserts information recording medium 7 into the input section of information recording medium production terminal 3a (the input section typically means a slot for receiving the information recording medium, such as a memory card, floppy disk, or MO, or means a connection terminal for digital camera 5 or cell-phone 6 incorporating a photo-capturing function), or connects a digital device to the input section [(a) in Fig. 7]. CPU thereby detects information recording medium 7 or the digital device [(b) in Fig. 7], and displays an insertion request of a writable information recording medium (a CD-R in this case) on a display device, such as a CRT, or a character LCD [(c) in Fig. 7].

After the insertion of CD-R into CD-R drive [(d) in Fig. 7], an insertion signal of CD-R is transferred from CD-R drive to the storage means [(e) in Fig. 7], and on the display device [(f) in Fig. 7], the storage means requests the user whether to copy or not. Next, user 2 orders the execution to copy via an input device, such as a keyboard, push buttons, or a touch panel, after which a copy execution ordering signal is transferred to CPU [(g) in Fig. 7]. Upon receiving the signal, CPU reads out the image data stored in the information recording medium or the digital device from the input section, and copies the image data onto a blank CD-R inserted in the CD-R drive [(h) in Fig. 7].

After the image data is copied onto the CD, CD-R sends a copy end signal to the CPU [(i) in Fig. 7]. Next, CPU determines whether the image displaying program has been recorded on the CD-R. If the image displaying program has not been recorded, then the storage means copies the image displaying program onto the CD-R [(j) in Fig. 7]. After the image displaying program is positively recorded, CD-R drive sends a "copy end" signal to the CPU [(k) in Fig .7], then, CPU orders the CD-R drive to eject the CD-R having the image displaying program [(k) in Fig. 7], and further, displays "end of copy" on the display device [(m) in Fig. 7].

Additionally, writing of the image data and writing of the program are performed separately, because there is the possibility that user 2 employs an information recording medium in which the image displaying program has already been stored. However, it is also possible to make a structure in which when a blank CD is employed, copying signal receiving means 13a receives the specified image data copying signal, next, copy data production means 13b produces the copy data including the image data and the image displaying program, after which writing means 13c writes the image data and the image displaying program, as one operation. Further, it is also possible to have a structure in which after information recording medium 7 is inserted into the input section, or a digital device is connected to the input section, a list of image data is displayed on the display device, and the image data to be copied is selected via the input device.

By executing the copying program on information recording medium production terminal 3a, user 2 only needs to insert digital camera 5 or cell-phone 6 incorporating a picture-capturing function, or inserts only information recording medium 7, into information recording medium production terminal 3a, the image data, recorded in the digital device or information recording medium 7,is automatically read out, and recorded together with the image displaying program for displaying the image data, so that second information recording medium 11 is produced. Accordingly, user 2 can easily view the image data, while using computer terminal 2a.

As described above, according to the program and the information recording medium of the present invention, in which said program is recorded, the image data can be easily displayed, and the targeted image data can also be easily displayed via the desired display method, without separately selecting the image data, or setting the process or the display.

Because, the copying program, which copies the targeted image data and the image displaying program for displaying the image data, and the image data or the image displaying program, as desired, are set together and stored in first information recording medium 10, and therefore, the image data can be viewed via the image reproducing device, such as a computer terminal, a DVD player, or a DVD recorder. Further, because the copying program stored in first information recording medium 10, receives the specified image data copy signal which was sent upon pressing of the button provided on the screen displayed by the image displaying program, which produced the copy data including the image data, the image displaying program, the data relating to the image data, after which it recorded the copy data into second information recording medium 11. Accordingly, when the user inserts second information recording medium 11 into the computer terminal, and activates the computer terminal, the image data is easily displayed.

## Claims

1. A program, comprising:
an image displaying program for using a computer to function as an image displaying device to display images based on image data by a predetermined displaying method; and
a copying program for using the computer to function as a receiving device to receive a specified image data copying signal which specifies image data as an object to be copied, whereby the specified image is displayed from among the image data by the image displaying program on the display means via the predetermined expressing method, and for using the computer to function as a copying device to copy the specified image data and the image displaying program into a predetermined area, after the computer receives the specified image data copying signal.

2. The program in claim 1, wherein the image data to be copied includes:
image data which is an original base of the image to be displayed on the image displaying device via the predetermined method, or
image data which have been processed or produced based on the image data as the original base.

3. The program in claim 2, wherein the image data processed or produced based on the image data as the original base includes:
motion image data which is one in which predetermined difference data is added to the image data as the original base, or
image data used as a design print combined by the image data as the original base.

4. The program in claim 1, for using the computer to function as the coping device which copies into the predetermined area, at least any one of:
setting information to display the image on the displaying device via the predetermined method,
music/sound information which is reproduced when the image is displayed, or
ordering information for ordering prints based on the image data.

5. An information recording medium, comprising:
an image displaying program for using a computer to function as an image displaying device to display images based on image data by a predetermined displaying method; and
a copying program for using the computer to function as a receiving device to receive a specified image data copying signal which specifies image data as an object to be copied, whereby a specified image is displayed by the image displaying program on the image displaying device via the predetermined displaying method, and for using the computer to function as a copying device to copy specified image data and the image displaying program into a predetermined area, after the computer receives the specified image data copying signal.

6. An information recording medium, comprising:
image data;
an image displaying program for using a computer to function as an image displaying device to display images based on image data by a predetermined displaying method; and
a copying program for using the computer to function as a receiving device to receive a specified image data copying signal which specifies image data as an object to be copied, whereby a specified image is displayed by the image displaying program on the image displaying device via the predetermined displaying method, and for using the computer as a copying device to copy specified image data and the image displaying program into a predetermined area, after the computer receives the specified image data copying signal.

7. An information recording medium, comprising:
image data; and
a copying program for using a computer to function as a receiving device to receive a specified image data copying signal which specifies image data as an object to be copied, and for using the computer to function as a copying device to copy specified image data and the image displaying program into a predetermined area, after the computer receives the specified image data copying signal.

8. The information recording medium in claim 5, wherein the image data to be copied includes:
image data which is an original base of the image to be displayed on the displaying device via the predetermined method, or
image data which have been processed or produced based on the image data as the original base.

9. The information recording medium in claim 8, wherein the image data which have been processed or produced based on the image data includes:
motion image data which is one in which a predetermined difference data is added to the image data as the original base, or
image data for a design print in which a plurality of the image data as the original base are combined.

10. The information recording medium in claim 5, for using the computer to function as the coping device which copies into the predetermined area, at least any one of:
setting information to display the image on the image displaying device via the predetermined method,
music/sound information which is reproduced when the image is displayed, or
ordering information for ordering prints based on the image data.

11. An information recording medium which is readable by a computer, comprising:
image data;
a first program for using a computer to function as a receiving device of print order data signals for a print order based on the image data, and for making the computer to function as a device for producing a print order data file based on the print order data signals; and
a copying program as a second program for using the computer to function as a receiving device of specified image data copying signals to specify the image data as an object to be copied, and for using the computer to function as a copying device to copy the image data which is specified by the specified image data copying signals, the print order data file, and the first program, into a predetermined area, after the computer receives the specified image data copying signals.
